Europäisches Patentamt

(19) European Patent Office

Office européen des brevets

(11) Numéro de publication: **0 010 035**
**A1**

(12) # DEMANDE DE BREVET EUROPEEN

(21) Numéro de dépôt: **79400680.9**

(22) Date de dépôt: **25.09.79**

(51) Int. Cl.³: **G 01 N 27/06**
**G 01 N 33/18**

(30) Priorité: **25.09.78 FR 7827374**

(43) Date de publication de la demande:
**16.04.80 Bulletin 80/8**

(84) Etats Contractants Désignés: ·
**BE DE GB IT NL SE**

(71) Demandeur: **Société à Responsabilité Limitée dite :**
**QUADRIVIUM TECHNIQUES AVANCEES**
**20, rue Saint-Louis-en-L'Ile**
**F-75004 Paris(FR)**

(72) Inventeur: **Baranoff, Dimitri**
**7, rue Molière**
**F-75001 Paris(FR)**

(74) Mandataire: **Boukhors, Alain**
**Cabinet BEAU de LOMENIE 55, Rue d'Amsterdam**
**F-75008 Paris(FR)**

(54) **Procédé et dispositif de détection d'élément d'impureté surnageant à la surface d'une étendue d'eau.**

(57) Procédé et dispositif de détection d'élément d'impureté surnageant à la surface d'une étendue d'eau.

Selon ce procédé, on mesure, en au moins un point de la surface de cette étendue d'eau, la résistivité d'une couche superficielle de cette étendue d'eau et on détermine la position de ce point de mesure sur la surface de cette étendue d'eau. Le dispositif comprend : un corps 1 susceptible de flotter à la surface de l'étendue d'eau 3, des électrodes 2 isolées électriquement l'une de l'autre ; des moyens pour mesurer la résistance entre lesdites électrodes ; et des moyens radio-électriques pour transmettre à distance une information de mesure qui est fonction de la valeur de cette résistance. L'invention s'applique notamment à la surveillance côtière contre la pollution par hydrocarbure.

Fig. 1

Procédé et dispositif de détection d'élément d'impureté surnageant à la surface d'une étendue d'eau.

La présente invention concerne un procédé de détection d'élément d'impureté surnageant à la surface d'une étendue d'eau, du type selon lequel on mesure, en au moins un point de la surface de cette étendue d'eau, la résistivité d'une couche superficielle de cette étendue d'eau et on détermine la position de ce point de mesure sur la surface de cette étendue d'eau.

L'invention concerne également un dispositif et une installation pour la mise en oeuvre de ce procédé.

On connaît, par le brevet français n° 1.399.477 un procédé selon lequel on mesure en un point de la surface d'une étendue d'eau, la résistivité d'une couche superficielle de cette étendue d'eau, un moyen d'un dispositif comportant un corps, plusieurs paires d'électrodes dont les électrodes de chaque paire sont isolées électriquement l'une de l'autre, elles sont montées sur le corps de manière à pouvoir être toutes les deux immergées dans l'eau, et elles sont associées à des moyens pour mesurer la résistance électrique apparaissant entre elles.

Néanmoins, ce procédé connu consiste à ne mesurer la résistivité de l'eau qu'en un point fixe. De plus, le corps du dispositif connu est à poste fixe et ne flotte pas.

Il en résulte que ce procédé et ce dispositif connus ne permettent pas de résoudre le problème du suivi d'une nappe d'hydrocarbure à la surface d'une étendue d'eau ; seul le suivi de telles nappes permet, en effet, de prévoir son évolution et de localiser les zones cotières risquant d'être polluées par la nappe.

L'invention remédie à cet inconvénient et a notamment pour but de proposer un procédé permettant de surveiller la localisation et l'extension spatiale d'une nappe d'hydrocarbure.

Ce but est atteint conformément à l'invention, du fait que la mesure de résistivité et la détermination de la position du point de mesure sont effectuées en plusieurs points.

Le procédé conforme à l'invention est avantageusement mis en oeuvre à l'aide d'au moins un dispositif de détection du type comportant un corps, au moins deux électrodes isolées électriquement l'une de l'autre et montées sur le corps de manière à pouvoir être toutes les deux immergées dans l'eau et des moyens pour mesurer la résistance entre lesdites électrodes, dispositif qui, conformément à l'invention, est caractérisé en ce que ledit corps est susceptible de flotter à la surface de l'étendue d'eau et qu'il comprend en outre des moyens pour transmettre à distance une information de mesure qui est fonction de la valeur de cette résistance et une information de position qui est fonction de la position dudit corps sur la surface de l'étendue d'eau.

Avantageusement, les électrodes de chaque groupe sont réparties sur la surface du corps de telle sorte que, simultanément, une électrode d'un groupe et une électrode de l'autre groupe soient toujours immergées dans le liquide de l'étendue d'eau, quelle que soit la position du corps autour de son centre.

Avantageusement, le corps est de forme sphérique.

Avantageusement, ledit corps est en matière plastique du type auto-lubrifiant ou en chlorure de polyvinyle.

Avantageusement, les électrodes sont chacune fixées sur le corps de façon démontable et font saillie vers l'extérieur à partir de la surface du corps, et ces électrodes sont choisies parmi des jeux d'électrodes de dimension(s) différente(s).

Avantageusement, les électrodes présentent une surface dépourvue d'arête vive et qui est, de préférence, polie ou chromée.

Avantageusement, le dispositif comprend en outre un émetteur radio relié aux moyens de mesure de résistance, pour transmettre à distance un signal qui est fonction de la valeur de résistance mesurée par lesdits moyens de mesure.

Selon un mode de réalisation préféré, les électrodes sont disposées sur une surface sphérique à la manière des polygones noirs disposés sur certains ballons de football, la surface sphérique en question étant d'ailleurs de la taille d'un ballon. Le nombre d'électrodes et leur disposition sont tels que, quelle que soit la position de la sphère, deux électrodes adjacentes sont en contact à chaque instant avec la surface de la mer.

Les électrodes sont avantageusement réalisées en matériaux résistant suffisamment à la corrosion par l'eau de mer : bronze, acier inoxydable... De plus, leur état de surface est particulièrement soigné (chromage, polissage) de façon à éviter l'adhésion du produit polluant. Elles sont, de préférence, de forme cylindrique - ou tronconique - ne présentant, de préférence, aucune arête vive pour éviter les risques de corrosion · Ces électrodes sont fixées de façon démontable sur le corps. On peut donc monter sur le corps des électrodes de hauteur spécialement choisie pour permettre la détermination de l'épaisseur de la couche de pétrole à laquelle on s'intéresse et à partir de laquelle on veut être prévenu.

Le procédé conforme à l'invention peut être mis en oeuvre à partir de dispositifs de détection définis ci-dessus, à l'aide d'une installation spécifique qui est caractérisée, conformément à l'invention, en ce qu'elle comprend au moins une station fixe ou mobile, de position connue ou déterminable, située à la surface du globe terrestre ou au-dessus de cette surface, cette station comprenant des moyens pour déterminer la direction de l'émission radio provenant de chaque dispositif de détection et pour capter cette émission.

D'autres caractéristiques et avantages de l'invention seront mieux compris à la lecture de la description qui va suivre de plusieurs exemples de réalisation et en se référant aux dessins annexés dans lesquels :

- la figure 1 est une vue en perspective d'un dispositif de détection selon un premier mode de réalisation de l'invention ;

- la figure 2 est un schéma des circuits électroniques du dispositif selon un mode de réalisation de l'invention ;

- la figure 3 est une vue en plan très schématique d'une installation selon un mode de réalisation de l'invention ; et

- la figure 4 est une vue en coupe verticale d'un deuxième mode de réalisation du dispositif selon l'invention.

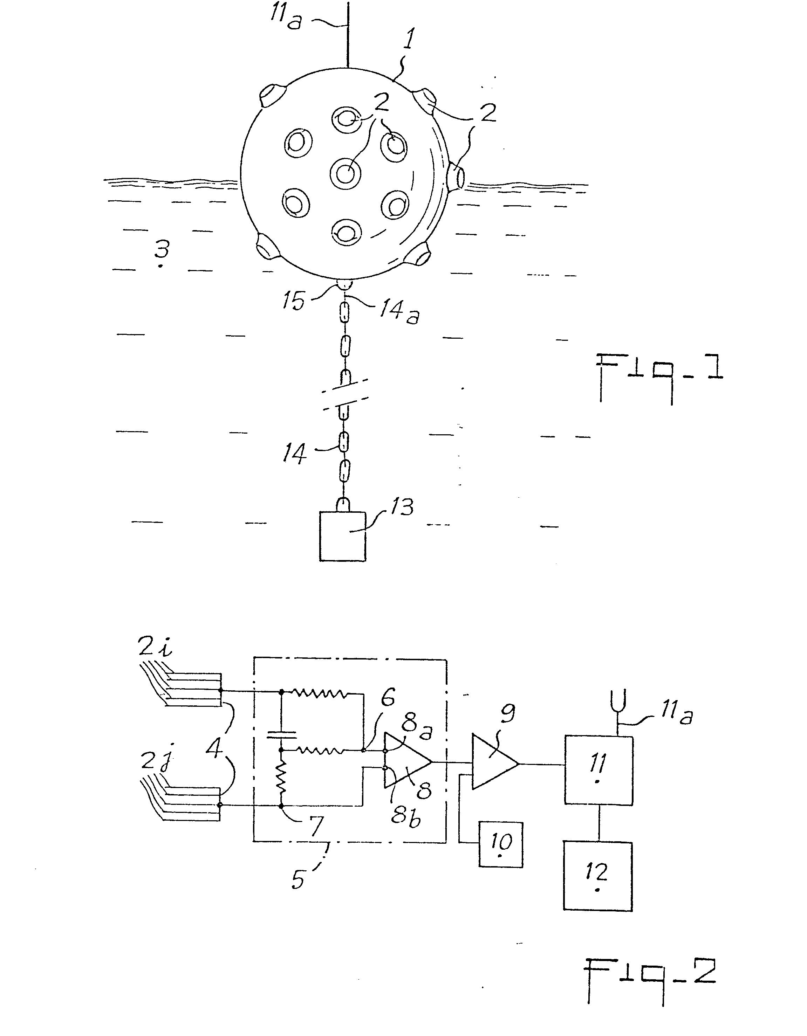

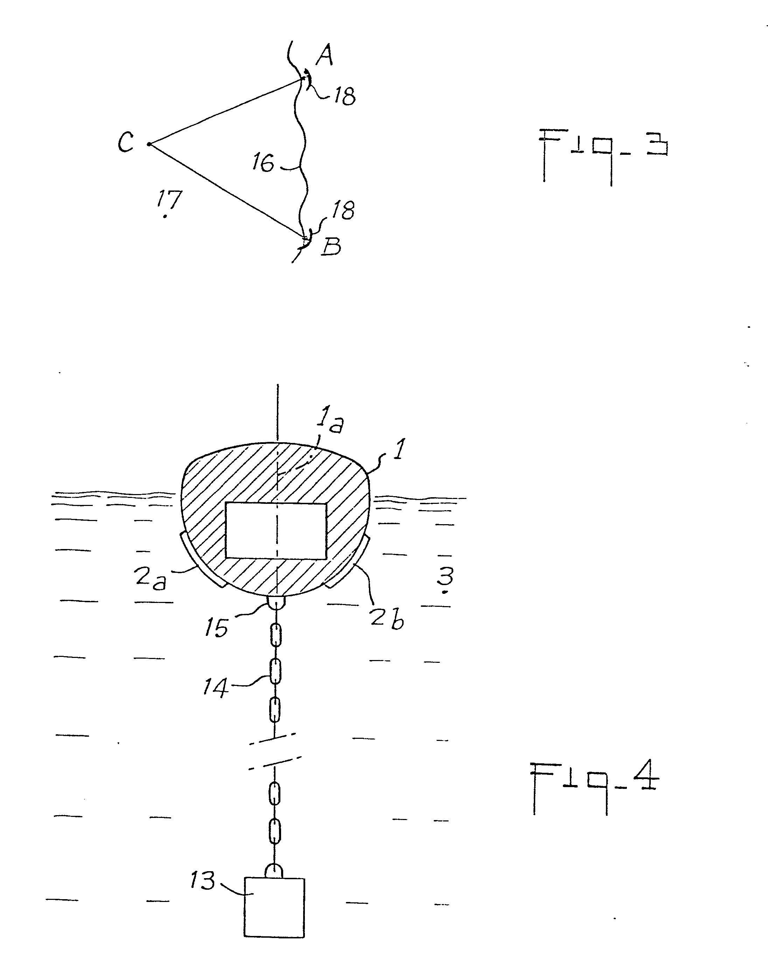

Le dispositif de détection représenté sur les figures 1 et 2 se compose d'un corps sphérique 1 en matériau isolant de l'électricité. Le corps 1 est muni d'électrodes en métal 2. Chaque électrode 2 présente une forme tronconique s'amincissant en direction opposée à la surface sphérique du corps 1.

Les électrodes 2 sont divisées en deux groupes égaux en nombre d'électrodes 2$i$, 2$j$. Les électrodes 2$i$, 2$j$ d'un même groupe sont court-circuitées les unes les autres, comme représenté sur la figure 2.

Le corps 1 muni de ses électrodes 2 présente une densité suffisamment faible pour pouvoir flotter à la surface d'une étendue d'eau 3.

A la fois toutes les électrodes 2 et les électrodes 2i, 2j de chaque groupe sont réparties uniformément à la surface du corps 1 et l'espacement entre deux
électrodes 2 voisines est choisi de telle sorte qu'il y
ait toujours au moins deux électrodes immergées appartenant chacune à un groupe différent, quelle que soit la
position angulaire du corps 1 autour de son centre.

Comme le montre la figure 2, le conducteur de
court-circuit 4 de chaque groupe d'électrodes 2i, 2j est
connecté à une borne d'entrée correspondante d'un circuit
de mesure de résistance 5. Dans l'exemple représenté, ce
circuit est constitué par un pont de Wheatstone dont les
bornes de sorties 6 et 7 sont reliées chacune à une entrée respective 8a, 8b d'un amplificateur différentiel 8.

Dans l'exemple représenté, le signal de sortie
du circuit de mesure de résistance 5 est appliqué à une
entrée d'un comparateur 9 dont l'autre entrée reçoit un
signal de référence d'amplitude constante fourni par un
générateur 10.

Le comparateur 9 est du type fournissant sur
sa sortie un signal d'amplitude constante, ou aucun signal, selon que l'amplitude du signal de mesure de résistance fourni par le circuit 5 est supérieure ou inférieure à l'amplitude du signal de référence.

Selon l'exemple représenté, le signal de sortie
du comparateur 9 alimente un émetteur de radio 11 émettant un signal du type numérique qui lui est appliqué par
un générateur 12. Ce signal numérique est, par exemple,
caractéristique du dispositif de détection et permet donc
d'identifier ce dernier lorsque plusieurs dispositifs de
détection identiques sont utilisés simultanément sur une
même région maritime.

L'ensemble des circuits électronique du dispositif de détection est logé à l'intérieur du corps 1 qui
peut être constitué par une sphère creuse en matière plastique. L'antenne 11a de l'émetteur radio 11 fait saillie à l'extérieur du corps 1 (figure 1). Pour éviter que cette antenne 11a soit immergée, il est avantageux de munir le corps d'un lest agencé pour agir sur la zone du corps 1 diamétralement opposée à l'antenne 11a. Selon un mode de réalisation non représenté, ce lest pourrait, par exemple, être constitué par un élément lourd fixé au corps 1 et logé dans ce dernier à l'opposé de l'antenne 11a ; ce lest peut aussi être constitué, comme représenté à la figure 1, par un poids 13 situé à l'extérieur du corps 1 et relié par une chaîne 14 au point de la surface sphérique du corps 1 qui est diamétralement opposé à l'antenne 11a ; à cet effet, un étrier 15 fixé au corps 1 au point précité reçoit le maillon extrême adjacent 14a de la chaîne 14.

Le dispositif de détection qui vient d'être décrit trouve notamment application dans la détection et la localisation de nappe d'hydrocarbure, par exemple de pétrole brut, surnageant à la surface des mers ou des océans.

Plus particulièrement, mais non exclusivement, dans cette application, les électrodes 2 sont réalisées en matériau résistant à la corrosion par l'eau de mer tel que le bronze ou l'acier inoxydable ; elles ont une surface extérieure dépourvue d'arête vive et leur état de surface est particulièrement amélioré par exemple par un chromage ou un polissage, de façon à éviter l'adhésion du produit polluant sur lesdites électrodes 2.

Le corps 1 est avantageusement constitué en matière plastique du type auto-lubrifiant, telle que le polytétrafluoroéthylène (PTFE), ou bien en chlorure de polyvinyle. Alternativement, le corps 1 peut être constitué sous la forme d'un caisson en métal recouvert d'une couche de matière isolante dont les caractéristiques de surface présentent les avantages de celles des matières plastiques auto-lubrifiantes.

La figure 3 montre une côte 16, deux stations fixes de réceptions radio A et B, placées le long de cette côte 16, et suffisamment espacées l'une de l'autre, et un dispositif de détection C placé en un point de la surface maritime 17 délimitée par la côte 16. Pour plus de clarté, les stations A et B et le dispositif de détection C ont été chacun représentés par un simple point sur la figure 3.

Les stations A et B sont munies chacune d'une antenne de réception-radio très directrice et orientable 18. Lorsqu'une nappe d'hydrocarbure atteint le dispositif C,celui-ci émet une onde radio qui est captée par les récepteurs des stations A et B. Grâce à leurs antennes directrices et orientables 18, les stations peuvent déterminer la direction des droites AC et BC ; connaissant exactement la position des points A et B, il est ainsi très facile de déterminer celle du point C.

Il est ainsi possible de constituer une installation de surveillance de côte très efficace en répartissant plusieurs stations telles que A et B le long d'une côte et en dispersant sur la surface maritime au large de cette côte plusieurs dispositifs de détection tels que celui qui est représenté sur les figures 1 et 2.

Les stations cotières fixes telles que A et B peuvent être remplacées par un satellite artificiel muni de dispositifs pour la détection de la position des dispositifs de détection.

Selon un autre mode de réalisation de l'invention les dispositifs de détection sont équipés d'un système de répondeur émettant un signal radio à la réception d'un signal radar, ce répondeur étant alimenté par le signal de sortie du comparateur 9. Ce système répondeur étant connu en soi, il n'est pas décrit davantage dans le présent texte. Ce mode de réalisation présente l'avantage de permettre la localisation des dispositifs à la surface de l'étendue d'eau à l'aide d'une seule station, pouvant être un avion survolant ladite étendue d'eau.

Selon le mode de réalisation représenté à la figure 4, le corps 1 n'est plus complètement sphérique mais sa partie émergée est tronquée de manière à n'offrir aucune résistance au vent.

Par ailleurs, ce dispositif ne comporte plus que deux électrodes 2a, 2b en forme de segment de circonférence appliqué contre la surface sphérique de la partie immergée du corps ; ces électrodes 2a, 2b sont, de préférence
disposées dans un même plan normalement vertical contenant
l'axe de symétrie 1a du corps.

        Bien entendu, le procédé de l'invention est
applicable pour la détection de toute autre liquide d'impureté ayant une conductivité électrique supérieure ou inférieure à celle de l'eau de mer.

0010035

REVENDICATIONS

1.	Procédé de détection d'élément d'impureté surnageant à la surface d'une étendue d'eau du type selon lequel on mesure, en au moins un point de la surface de cette étendue d'eau, la résistivité d'une couche superficielle de cette étendue d'eau et on détermine la position de ce point de mesure sur la surface de cette étendue d'eau, caractérisé en ce que la mesure de résistivité et la détermination de la position du point de mesure sont effectuées en plusieurs points.

2.	Dispositif de détection pour la mise en oeuvre du procédé selon la revendication 1 du type comprenant un corps, au moins deux électrodes isolées électriquement l'une de l'autre et montées sur le corps de manière à pouvoir être toutes les deux immergées dans l'eau et des moyens pour mesurer la résistance entre lesdites électrodes, caractérisé en ce que ledit corps est susceptible de flotter à la surface de l'étendue d'eau et qu'il comprend en outre des moyens pour transmettre à distance une information de mesure qui est fonction de la valeur de cette résistance et une information de position qui est fonction de la position dudit corps sur la surface de l'étendue d'eau.

3.	Dispositif de détection selon la revendication 2 et comprenant au moins quatre électrodes réparties sur la surface du corps, et divisées en deux groupes, les électrodes d'un même groupe étant court-circuitées ensemble, et les moyens de mesure de résistance étant branchés entre les électrodes du premier groupe et celles du second groupe, caractérisé en ce que les électrodes de chaque groupe sont réparties sur la surface du corps de telle sorte que, simultanément, une électrode d'un groupe et une électrode del'autre groupe soient toujours immergées dans le liquide de l'étendue d'eau, quelle que soit la position du corps autour de son centre.

0010035

4.      Dispositif de détection selon l'une des revendications 2 et 3, caractérisé en ce que le corps est de forme sphérique.

5.      Dispositif de détection selon l'une des revendications 2 à 4, dans lequel le corps est, au moins dans une partie superficielle, réalisé en matériau isolant de l'électricité, caractérisé en ce que ledit corps est en matière plastique du type auto-lubrifiant ou en chlorure de polyvinyle.

6.      Dispositif de détection selon l'une des revendications 2 à 5, caractérisé en ce que les électrodes sont chacune fixées sur le corps de façon démontable et font saillie vers l'extérieur à partir de la surface du corps, et en ce que ces électrodes sont choisies parmi des jeux d'électrodes de dimension(s) différente(s).

7.      Dispositif selon l'une des revendications 2 à 6, caractérisé en ce que les électrodes présentent une surface dépourvue d'arête vive et qui est, de préférence, polie ou chromée.

8.      Dispositif selon l'une des revendications 2 à 7, caractérisé en ce qu'il comprend en outre un émetteur radio relié aux moyens de mesure de résistance, pour transmettre à distance un signal qui est fonction de la valeur de résistance mesurée par lesdits moyens de mesure.

9.      Installation pour la mise en oeuvre du procédé selon la revendication 1 à l'aide d'au moins un dispositif de détection selon la revendication 8, caractérisée en ce qu'elle comprend au moins une station fixe ou mobile de position connue ou déterminable située à la surface du globe terrestre ou au-dessus de cette surface, cette station comprenant des moyens pour déterminer la direction de l'émission radio provenant de chaque dispositif de détection et pour capter cette émission.

PL. 1/2.

0010035

Fig-1

Fig-2

Fig-3

Fig-4

0010035

Numéro de la demande

EP 79 40 0680

## Office européen des brevets

## RAPPORT DE RECHERCHE EUROPEENNE

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | <u>BE - A - 813 640</u> (C. RALET) <br> * Page 5, deuxième paragraphe - page 7, premier paragraphe; figure 1 * <br><br> -- | 1,2 | G 01 N 27/06 <br> G 01 N 33/18 |
| | <u>US - A - 4 058 802</u> (F. MEYERS) <br> * Colonne 2, ligne 9 - colonne 3, ligne 53; figure 1 * <br><br> -- | 1,2,8, 9 | |
| A | <u>US - A - 3 800 219</u> (T.M. FOSBERG) <br> * En entier * <br><br> -- | 1 | **DOMAINES TECHNIQUES RECHERCHES (Int. Cl. 3)** <br><br> G 01 N 27/06 <br> G 01 N 27/07 <br> G 01 N 27/08 |
| A | <u>FR - A - 2 168 374</u> (ROBERTSHAW <u>CONTROLS COMPANY</u>) <br> * En entier * <br><br> ---- | 1 | G 01 N 27/10 <br> G 01 K 27/22 <br> G 01 N 33/18 |

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-12-1979 | DUCHATELLIER |

OEB Form 1503.1 06.78